# EUROPEAN PATENT APPLICATION

(11) **EP 3 057 090 A1**
(43) Date of publication of application: **17.08.2016**
(21) Application number: 14852172.7
(22) Date of filing: 07.10.2014
(51) Int. Cl.: G10H 7/02, G10H 1/40

(54) **TECHNIQUE FOR REPRODUCING WAVEFORM BY SWITCHING BETWEEN PLURALITY OF SETS OF WAVEFORM DATA**

(30) Priority: 09.10.2013 JP 2013212257
(71) Applicant: Yamaha Corporation, Hamamatsu-shi, Shizuoka 430-8650 (JP)
(72) Inventor: UEMURA, Norihiro, Hamamatsu-shi Shizuoka 430-8650 (JP); YAMAMOTO, Kazuhiko, Hamamatsu-shi Shizuoka 430-8650 (JP)
(74) Representative: Ettmayr, Andreas
(86) International application number: PCT/JP2014/076844
(87) International publication number: WO 2015/053278

(57) **Abstract**

The object of the present invention is to switch between a plurality of sets of waveform data at desired timing while preventing occurrence of noise. In response to an instruction for switching from a currently reproduced set of waveform data (20) to another set of waveform data (20'), either a switching position in the other set of waveform data (20') or a switching in the currently reproduced waveform data (20) is set as end timing for ending the reproduction of the currently reproduced set of waveform data (20), with reference to switching position information (25) of the two sets of waveform data. If the switching position in the currently reproduced set of waveform data (20) is present within a 50 msec time range before a switching position in the other set of waveform data (20') that is present immediately after the switching instruction, the switching position in the currently reproduced set of waveform data (20) is set as the ending; if not, the switching position in the other set of waveform data (20') is set as the end timing.

## Description

### Technical Field:

The present invention relates to a waveform reproduction technique for reproducing tones by sequentially switching between a plurality of sets of waveform data, and relates more particularly to a technique for controlling timing for switching between sets of waveform data to be used for reproduction.

### Background Art:

Heretofore, there have been known automatic performance apparatus which prestore accompaniment pattern data indicative of, for example, arpeggio, bass, rhythm and other patterns, and which execute an automatic performance of tones on the basis of such accompaniment pattern data. Note that, in this specification, the term "tone" is used to refer to not only a musical sound but also a voice or any other sound.

Generally, each set of accompaniment pattern data has a time length corresponding to about several measures. By repetitively reading out one set of accompaniment pattern data (hereinafter referred to also as "main pattern"), the automatic performance apparatus execute an automatic performance, based on the set of accompaniment pattern data, successively over a plurality of measures. Further, in the automatic performance apparatus, there are prepared, in addition to the main pattern, sub accompaniment pattern data (referred to as "sub patterns"), called fill-in or break, ad lib, etc., each having a time length (e.g., only one measure) shorter than that of the main pattern. Once an instruction for switching from the main pattern to the sub pattern is given by a user's operation during repetitive reproduction of the main pattern, the automatic performance apparatus performs control for stopping the reproduction of the main pattern to reproduce the instructed sub pattern to the end of the sub pattern and then automatically resuming the reproduction of the main pattern.

Patent Literature 1 discloses an apparatus which, in response to an instruction for switching from a main pattern to a sub pattern, such as a fill-in pattern, immediately switches the accompaniment pattern data from the main pattern to the sub pattern, without waiting for a current reproduced position of the main pattern to arrive at a measure boundary position, even when the current reproduced position of the main pattern is on the way, or partway, through the measure. According to the disclosure in Patent Literature 1, tone control data defined in accordance with a predetermined standard, such as MIDI data defined in the MIDI standard.

### Prior Art Literature:

### Patent Literature:

Patent Literature 1: Japanese Patent Application Laid-open Publication No. HEI-10-268866

In some cases, audio waveform data (hereinafter referred to simply as "waveform data") obtained by sampling actual performance tones of musical instruments, human voices and natural sounds as well as the aforementioned MIDI data are used as accompaniment pattern data.

In a case where the technique disclosed in above-identified Patent Literature 1 is applied to accompaniment pattern data prepared in waveform data, there would arise the problem that noise is generated as a main pattern prepared in some waveform data is switched to a sub pattern prepared in other waveform data. For example, if reproduction of the sub pattern is started at desired timing, the reproduction cannot necessarily be started with a start or head portion (i.e., attack portion) of a given tone; that is, the reproduction may sometimes be started with an intermediate or en route portion of a tone, i.e. started partway through a tone. In such a case, tone generation from en route portion of a tone can become noise. Further, if switching is made to the sub pattern immediately after an attack portion has been sounded during reproduction of the main pattern, and if an attack portion is present also at a position of the sub pattern immediately after the switching, so-called twice sounding would occur, which can become noise

### Summary of Invention:

In view of the foregoing prior art problems, it is an object of the present invention to provide an improved technique which permits switching between sets of waveform data at desired timing while preventing generation of noise at the time of switching from a currently reproduced set of waveform data to another set of waveform data.

According to the present invention, there is provided a computer-readable storage medium containing a group of instructions executable by a processor for performing a method for reproducing a waveform by use of a plurality of sets of waveform data stored in a storage unit, the method comprising: a reproduction step of reproducing any one of the plurality of sets of waveform data, stored in the storage unit, in accordance with the passage of time; a step of designating a second set of waveform data of the plurality of sets of waveform data during reproduction, by the reproduction step, of a first set of waveform data of the plurality of sets of waveform data; a step of acquiring, for each of the first set of waveform data and the second set of waveform data, switching position information specifying one or more switching positions in the waveform data; a setting step of setting, as end timing for ending reproduction of the currently reproduced first set of waveform data, either one switching position in the second set of waveform data or one switching position in the currently reproduced first set of waveform data at least on the basis of a time point when designation of the second set of waveform data has been received and with reference to the switching position information of the first set of waveform data and the switching position information of the second set of waveform data; and a control step of, in response to the designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step.

According to the present invention, once another set of waveform data (second set of waveform data) is designated during reproduction of one set of waveform data (first set of waveform data), the switching position information specifying one or more switching positions in the waveform data is acquired for each of the currently reproduced first set of waveform data and the designated second set of waveform data. The switching positions are, for example, attack portions of individual tones recorded as waveform data. Either one switching position in the second set of waveform data or one switching position in the first set of waveform data is set as, the end timing for ending the reproduction of the currently reproduced first set of waveform data, at least on the basis of the time point when the designation of the second set of waveform data has been received and with reference to the switching position information of the first set of waveform data and the switching position information of the second set of waveform data. If the switching position in the first set of waveform data is set as the end timing, it is possible to reliably prevent an unwanted tone from being generated immediately before the end of the switched-from first set of waveform data. Therefore, the present invention can reliably prevent generation of noise due to so-called "twice sounding", where tones are generated at generally the same time (i.e., within a short time) in both of the switched-from and switched-to sets of waveform data, at the time of switching between the two sets of waveform data. If, on the other hand, the switching position in the second set of waveform data designated as the switched-to set of waveform data (i.e., switching destination) is set as the end timing, the reproduction of the currently reproduced first set of waveform data is ended at the switching position in the second set of waveform data designated as the switching destination. Thus, reproduction of the switched-to second set of waveform data (designated as the switching destination) can be started at the switching position in the second set of waveform data. In this way, the present invention can prevent generation of noise at the start of the reproduction of the switched-to second set of waveform data (e.g., noise due to the starting of the reproduction partway through, i.e. at an en route position of, a waveform).

As a result, the present invention can achieve the superior advantageous benefit of permitting waveform data switching at desired timing while reliably preventing occurrence or generation of noise due to the switching from the currently reproduced waveform data (first set of waveform data) to another set of waveform data (second set of waveform data).

In one embodiment of the invention, the setting step may be configured to further set the set end timing as start timing for starting the reproduction of the designated second set of waveform data.

As a specific example, the setting step determines whether or not any switching position in the currently reproduced first set of waveform data is present within a predetermined time (range) before a switching position in the second set of waveform data that is present immediately after the time point when the designation of the second set of waveform data has been received. Upon determination that any switching position in the currently reproduced first set of waveform data is present within the predetermined time, the setting step sets, as the end timing, the switching position in the currently reproduced first set of waveform data. By thus setting, as the end timing, the switching position in the currently reproduced first set of waveform data, it is possible to avoid unwanted tone generation immediately before the end of the currently reproduced waveform data (first set of waveform data) and thereby prevent twice sounding. Upon determination that no switching position in the currently reproduced first set of waveform data is present within the predetermined time, the setting step sets, as the end timing, a switching position in the second set of waveform data present immediately after the time point when the designation of the second set of waveform data has been received, so that it is possible to prevent not only noise due to "twice sounding" but also noise at the start of reproduction of the other set of waveform data (second set of waveform data).

In another embodiment of the invention, the setting step further may be configured to set, as start timing for starting the reproduction of the designated second set of waveform data, a musical boundary position present immediately after the time point when the designation of the second set of waveform data has been received.

As another specific example, the setting step determines whether or not any switching position in the currently reproduced first set of waveform data is present within a predetermined time (range) before a musical boundary that is present immediately after the time point when the designation of the second set of waveform data has been received. Upon determination that any switching position in the currently reproduced first set of waveform data is present within the predetermined time, the setting step sets, as the end timing, that switching position in the first set of waveform data. By thus setting, as the end timing, the switching position in the currently reproduced first set of waveform data, it is possible to avoid unwanted tone generation immediately before the end of the currently reproduced waveform data (first set of waveform data) and thereby prevent twice sounding. Upon determination that no switching position in the currently reproduced first set of waveform data is present within the predetermined time, on the other hand, the setting step sets, as the end timing, the musical boundary position present immediately after the time point when the designation of the second set of waveform data has been received. Thus, it is possible to prevent not only "twice sounding" immediately before the end of the currently reproduced waveform data immediately before the end of the currently reproduced set of waveform data but also noise at the start of the reproduction of the other set of waveform data (second set of waveform data).

According to another aspect of the present invention, there is provided a waveform reproduction apparatus, which comprises: a storage unit configured to store a plurality of sets of waveform data; a reproduction configured to reproduce any one of the plurality of sets of waveform data, stored in the storage unit, in accordance with the passage of time; a designation unit that designates a second set of waveform data of the plurality of sets of waveform data during reproduction, by the reproduction unit, of a first set of waveform data of the plurality of sets of waveform data; an acquisition unit that acquires, for each of the first set of waveform data and the second set of waveform data, switching position information specifying one or more switching positions in the waveform data; a setting unit that sets, as end timing for ending reproduction of the currently reproduced first set of waveform data, either one switching position in the second set of waveform data or one switching position in the currently reproduced first set of waveform data at least on the basis of a time point when designation of the second set of waveform data has been received and with reference to the switching position information of the first set of waveform data and the switching position information of the second set of waveform data; and a control unit that, in response to the designation of the second set of waveform data, performs control for switching the waveform data to be reproduced by the reproduction unit from the first set of waveform data to the second set of waveform data, the control unit at least performing control for ending the reproduction of the first set of waveform data in response to timing of waveform data reproduction by the reproduction unit reaching the end timing set by the setting unit.

According to still another aspect of the present invention, there is provided a method executable by a processor for reproducing a waveform by use of a plurality of sets of waveform data stored in a storage unit, which comprises: a reproduction step of reproducing any one of the plurality of sets of waveform data, stored in the storage unit, in accordance with the passage of time; a step of designating a second set of waveform data of the plurality of sets of waveform data during reproduction, by the reproduction step, of a first set of waveform data of the plurality of sets of waveform data; a step of acquiring, for each of the first set of waveform data and the second set of waveform data, switching position information specifying one or more switching positions in the waveform data; a setting step of setting, as end timing for ending reproduction of the currently reproduced first set of waveform data, either one switching position in the second set of waveform data or one switching position in the currently reproduced first set of waveform data at least on the basis of a time point when designation of the second set of waveform data has been received and with reference to the switching position information of the first set of waveform data and the switching position information of the second set of waveform data; and a control step of, in response to the designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step.

### Brief Description of Drawings:

Fig. 1 is a conceptual diagram explanatory of waveform data switching processing that characterizes the present invention;
Fig. 2 is a block diagram showing an example hardware setup of an embodiment of an electronic musical instrument to which is applied the present invention;
Fig. 3 is a conceptual diagram showing a data structure of accompaniment pattern data;
Fig. 4A is a diagram showing, by musical scores, example waveform data to be used as accompaniment pattern data;
Fig. 4B is a time chart conceptually showing waveform data corresponding to the musical scores shown in Fig. 4A and explanatory of onset information associated with the waveform data;
Fig. 5 is a flow chart showing an example of automatic performance processing performed in the electronic musical instrument;
Fig. 6 is a flow chart showing an example of a section switching timing setting process;
Fig. 7 is a flow chart showing an example of a within-measure section switching timing setting process;
Fig. 8 is a flow chart showing an example of an at-measure-boundary-position section switching timing setting process; and
Fig. 9 is a flow chart of an example of a section switching process.

### Description of Embodiments:

Embodiments of the present invention will be described in detail with reference to the accompanying drawings.

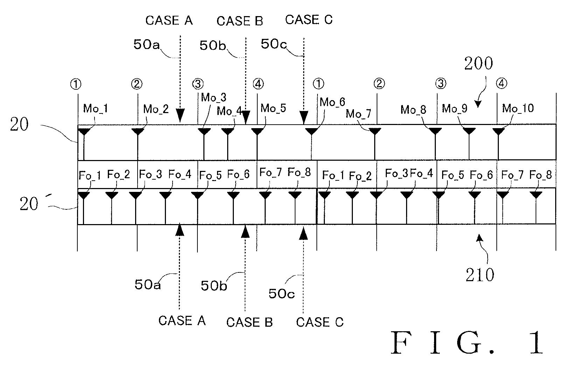

Fig. 1 is a conceptual diagram explanatory of waveform data switching processing that characterizes the present invention. In Fig. 1, two horizontal graphics arranged in a vertical direction depict two sets of waveform data 20 and 20'. Encircles numerals "1", "2", "3" and "4" each indicate a count of beats in a measure, and the horizontal direction in the figure corresponds to a reproduction time axis of the sets of waveform data 20 and 20'. One of the sets of waveform data 20 has a time length of two measures, while the other set of waveform data 20' has a time length of one measure. In Fig. 1, for the set of waveform data 20' having the time length of one measure, two (i.e., two sets of) same waveform data are depicted in succession just for convenience of associating the set of waveform data 20' with the set of waveform data 20 having the time length of two measures.

With the sets of waveform data 20 are associated pieces of switching position information indicative of one or more potential switching positions (also referred to as "onset information") of the respective waveform data. Each of the potential switching positions is a position of the waveform data 20 or 20' that is settable, when one of the sets of waveform data being currently reproduced is to be switch to the other set of waveform data 20', as timing for the switching (switching timing), i.e. end timing for ending the switched-from (i.e., currently reproduced) set of waveform data or start timing for starting the switched-to set of waveform data. One of the sets of waveform data 20 (that is associated with a later-described main section 200) shown in an upper section of the figure has ten potential switching positions "Mo_1", "Mo_2", ..., "Mo_10", while the other set of waveform data 20 (that is associated with a later-described fill-in section 210) shown in a lower section of the figure has eight potential switching positions "Fo_1", "Fo_2",...., "Fo_8".

A main feature of the present invention is as follows. Namely, once an instruction is given, during reproduction of one of the sets of waveform data 20 (i.e., first set of waveform data 20), for switching the waveform data to be reproduced (i.e., reproduction-object waveform data) to the other set of waveform data (i.e., second set of waveform data) 20', the reproduction of the currently reproduced set of waveform data 20 is ended at either one of the potential switching positions "Fo_1", "Fo_2", ..., "Fo_8" of the designated other set of waveform data 20' or one of the potential switching positions "Mo_1", "Mo_2", ..., "Mo_10" of the currently reproduced set of waveform data 20 at least on the basis of a time point when the instruction has been accepted and with reference to the switching position information of the currently reproduced set of waveform data (i.e., first set of waveform data) 20 and the switching position information of the other set of waveform data (i.e., second set of waveform data) 20'. Process for setting switching timing and switching process performed in the instant embodiment will be described in detail later.

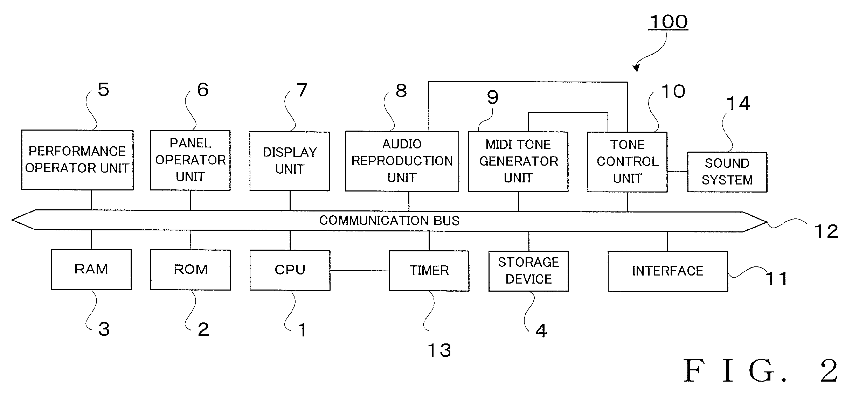

Fig. 2 is a block diagram showing an example hardware setup of an embodiment of an electronic musical instrument 100 to which is applied the present invention. In the electronic musical instrument 100, various processes are carried out under control of a microcomputer including a microprocessor unit (CPU) 1, a read-only memory (ROM) 2 and a random access memory (RAM) 3. The CPU 1 controls operation of the entire electronic musical instrument 100. To the CPU 1 are connected, via a communication bus 12, the ROM 2, the RAM 3, a storage device 4, a performance operator unit 5, a panel operator unit 6, a display unit 7, an audio reproduction unit 8, a MIDI tone generator unit 9, a tone control circuit 10 and an interface 11.

Also connected to the CPU 1 is a timer 13 for counting various times, for example, to signal interrupt timing for timer interrupt processes and count various times. For example, the timer 13 generates tempo clock pulses for setting a performance tempo at which to automatically perform tones, frequencies at which to perform time stretch control of waveform data, etc. Such tempo clock pulses generated by the timer 13 are given to the CPU 1 as processing timing instructions or as interrupt instructions. The CPU 1 carries out various processes in accordance with such instructions.

The ROM 2 stores therein various control programs for execution by the CPU 1, various data for reference by the CPU 1, etc. The RAM 3 is used as a working memory for temporarily storing various data generated as the CPU 1 executes various programs, as a memory for temporarily storing a currently-executed program and data related to the currently-executed program, and for various other purposes.

The storage device 4 has a built-in database capable of storing a multiplicity of various data, such as a plurality of sets of accompaniment pattern data, among other things. The storage device 4 may also store therein various control programs for execution by the CPU 1. In a case where a particular program is not prestored in the ROM 2, the program may be prestored in the external storage device (e.g., hard disk device) 4, so that, by reading out the program from the external storage device 4 into the RAM 3, the CPU 1 is allowed to operate in exactly the same way as in the case where the particular program is prestored in the ROM 2. This arrangement greatly facilitates version upgrade of the program, addition of a new program, etc.

The storage device 4 may be of any desired type as long as it uses any of various recording media, such as the hard disk (HD), a flexible disk (FD), compact disk (CD-ROM or CD-RAM), magneto-optical disk (MO) and DVD (digital versatile disk). Alternatively, the storage device 4 may be a semiconductor memory, such as a flash memory.

The performance operator unit 5 is, for example, a keyboard including a plurality of keys operable to select pitches of tones to be generated and key switches provided in corresponding relation to the keys. The performance operator unit 5 is usable for a manual performance by a human player, but also usable as an input means for inputting chords for use in an automatic accompaniment function. Needless to say, the performance operator unit 5 may be of any other type than the keyboard type, such as a string instrument type (guitar type), a wind instrument type or a percussion instrument type.

The panel operator unit 6 includes various manual operators provided on an operation panel of the electronic musical instrument 100, such as a section switching switch, a tempo setting switch for setting a performance tempo, and a reproduction (play)/stop button for instructing start/stop of an automatic performance.

The display unit 7, which comprises a liquid crystal display (LCD) panel, a CRT and/or the like, visually displays not only various screens (such as an accompaniment pattern data selection screen, a performance tempo setting screen and a section switching screen) responsive to operations on the panel operator unit 6 but also various information, such as content of currently selected accompaniment pattern data, and controlling states of the CPU 1. The human player can readily perform various operations, such as accompaniment pattern data selection, performance tempo setting and section switching, by reference to various information displayed on the display unit 7.

The audio reproduction unit 8 generates and outputs a waveform signal on the basis of waveform data given via the communication bus 12. The MIDI tone generator unit 9 generates and outputs a waveform signal on the basis of MIDI data given via the communication bus 12.

The above-mentioned audio reproduction unit 8 and MIDI tone generator unit 9 are connected to the tone control unit 10. The tone control unit 10, which includes a signal mixing (adding) circuit, a D/A conversion circuit, a tone volume control circuit, etc., imparts various effects to waveform signals generated by the audio reproduction unit 8 and MIDI tone generator unit 9 by performing digital signal processing on the waveform signals, mixes (adding together) these waveform signals and output the mixed waveform signals to a sound system 14 including a speaker etc. The sound system 14 audibly generates tones corresponding to the waveform signals output from the tone control unit 10.

The interface 11 is an interface for transmitting and receiving (i.e., communicating) various data and various information, such as a control program, between the electronic musical instrument 100 and not-shown other equipment. The electronic musical instrument 100 may include one or more such interfaces 11, such as a MIDI interface compliant with the MIDI standard and a network interface compliant with the Ethernet (registered trademark) standard. These internets 11 may be of either or both of wired and wireless connection types.

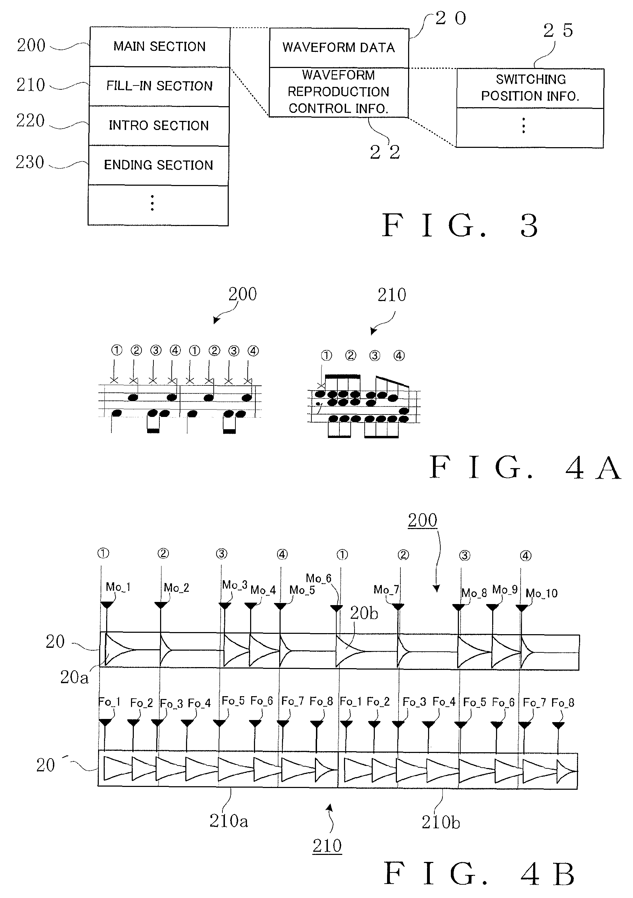

Fig. 3 is a conceptual diagram showing a data structure of accompaniment pattern data stored in the database built in the electronic musical instrument 100. The database is built, for example, in the storage device 4. As shown in Fig. 3, a plurality of sets of accompaniment pattern data 200, 210, 220, 230, ... are stored in the database. These sets of accompaniment pattern data 200, 210, 220, 230, ... are associated with various sections, such as main, fill-in, intro and ending sections. These sections are components of an accompaniment of a music piece.

Each of the accompaniment pattern data 200, 210, 220, 230, ... comprises one or more sets of waveform data 20 each of which is to be used as accompaniment pattern data, and waveform reproduction control information 22 associated with the individual sets of waveform data 20. Each of the sets of waveform data 20 comprises tone waveform data (audio waveform data) obtained by sampling actual performance tones of a musical instrument, a human voice, a natural sound, etc. Each of the sets of waveform data 20 of the individual sections 200, 210, 220, 230, ... has a time length of one measure and has, as its content, a performance of a musical instrument suited for the corresponding section. The waveform data 20 may be of any desired one of formats, such as WAV, AIFF and MP3.

The waveform reproduction control information 22 includes switching position information 25 specifying one or more potential switching positions (one or more pieces of onset information) set for the corresponding set of waveform data 20. The waveform reproduction control information 22 may further include a basic tempo indicative of a tempo used at the time of recording of the waveform data 20, beat information indicative of timing of individual beats within a measure of the waveform data 20, etc.

As shown in Fig. 1, the switching position information 25, which is information specifying one or more potential switching positions (one or more pieces of onset information) in the corresponding set of waveform data 20, is referenced for determining later-described section switching timing. Various information in the waveform reproduction control information 22 including the switching position information 25 can be obtained by analyzing the corresponding set of waveform data 20. At the time of an automatic performance, the CPU 1 controls various parameters to be used in reproduction processing of the waveform data 20, with reference to the waveform reproduction control information 22.

Figs. 4A and 4B are diagrams explaining in detail the sets of waveform data 20 and 20' shown in Fig. 1 and the switching position information 25 associated with the sets of waveform data 20 and 20'. Let it be assumed that the set of waveform data 20 is associated with the accompaniment pattern data 200 of the main section and the set of waveform data 20' is associated with the accompaniment pattern data of the fill-in section 210. Encircles numerals "1", "2", "3" and "4" each indicate a count of beats in a measure, and the horizontal direction in the figure corresponds to a reproduction time axis of the sets of waveform data 20 and 20'. As an example, the sets of waveform data 20 and 20' each represent a drum performance (i.e., the sets of waveform data 20 and 20' are each accompaniment pattern data for a drum part). Note that, in this specification, the accompaniment pattern data of the individual sections (i.e., accompaniment pattern data of the main section 200, accompaniment pattern data of the fill-in section 210, ...) will sometimes be written as the names of the sections, such as the main section 200, fill-in section 210 and so on.

Fig. 4A shows, by musical scores, respective performance content of the sets of waveform data 20 and 20' associated with the main section 200 and fill-in section 210. As shown in Fig. 4A, the main section 200 has a time length of two measures. According to the performance content of the main section 200, a bass drum is performed once with a quarter note at a first beat, a snare drum is performed once with a quarter note at a second beat, the bass drum is performed twice with an eighth note at a third beat and the snare drum is performed once with a quarter note at a fourth beat within one measure while a hi-hat is performed successively with quarter notes within the measure. On the other hand, the fill-in section 210 has a time length of one measure. According to the performance content of the fill-in section 210, a high tom, a middle tom, a floor tom, the bass drum and the snare drum are hit with eight eighth notes to perform a drum roll.

Fig. 4B is a diagram explanatory of respective waveform shapes and switching position information 25 of the set of waveform data 20 associated with the main section 200 and the set of waveform data 20' associated with the fill-in section 210. The respective waveform shapes of the sets of waveform data 20 and 20' are each indicative of a tone volume variation of recorded performance tones of a musical instrument. The set of waveform data 20 associated with the main section 200 is a recording of drum performance tones of two measures based on the musical score shown in Fig. 4A. As well known in the art of automatic accompaniments using accompaniment pattern data, the main section 200 is created assuming that the two-measure waveform data 20 is reproduced in a repetitive or looped manner.

The set of waveform data 20' associated with the fill-in section 210 is a recording of drum performance tones of one measure based on the musical score shown in Fig. 4A. This fill-in section 210 is created assuming that the one-measure waveform data is reproduced at least once during looped reproduction of the main section 200 in response to a user's operation and then the reproduction of the main section 200 is resumed, i.e. that the one-measure waveform data is inserted during the looped reproduction of the main section 200. Note that, in Figs. 4A and 4B (and Fig. 1), two waveform data 210a and 210b of the fill-in section 210 are shown as arranged in series along the time axis just for convenience of associating the set of waveform data 20' with the set of waveform data 20.

In each of the sets of waveform data 20 and 20', potential switching positions (pieces of onset information) are set for one or more attack portions ("peak" portions of the waveform shown in Fig. 4B) included in tones recorded as the waveform data. More specifically, a start position (rise position of the waveform) of each of the attack portions is set as the potential switching position (onset information). The switching position information 25 is information specifying the potential switching positions (pieces of onset information) corresponding to the one or more attack portions ("peak" portions of the waveforms shown in Fig. 4B). For example, the switching position information 25 of the main section 200 shown in Figs. 1 and 4 comprises data specifying ten pieces of onset information "Mo_1", "Mo_2",...., "Mo_10" corresponding to ten attack portions of the set of waveform data 20. Further, the switching position information 25 of the fill-in section 210 shown in Figs. 1 and 4B comprises data specifying eight pieces of onset information "Fo_1", "Fo_2", ..., "Fo_8" corresponding to eight attack portions of the set of waveform data 20'.

For example, at the first beat of the first measure of the main section 200, the hi-hat and the bass drum are performed (see the musical score of Fig. 4A). In this case, the hi-hat and the bass drum are performed at the same beat, and thus, there is only one attack portion 20a corresponding to tones of these musical instruments in the waveform data. Further, in this case, one piece of onset information "Mo_1" is set at the start or head position of the attack portion 20a.

Here, the sets of waveform data 20 and 20' comprise data obtained by sampling (recording) performance tones actually performed by a human player using a drum set in accordance with content indicated by the scores shown in Fig. 4A. Because performances by human players more or less vary from one another, positions of individual tones recorded as the waveform data 20 and 20' are generally deviated from accurate beat positions (i.e., accurate timing). Therefore, the position of each of the pieces of onset information tends to be slightly deviated from the beat position of the corresponding note indicated on the musical score of Fig. 4A.

For example, because a performance tone 20b corresponding to the high-hat and bass drum at the first beat of a second measure of the main section 200 was performed at earlier timing at the time of the recording, the performance tone 20b is recorded at the end of the first measure in the set of waveform data 20. Therefore, the onset information "Mo_6" corresponding to the performance tone 20b is set at the end of the first measure (more specifically, at the start position of the attack portion of the performance tone 20b) rather than at the first beat position of the second measure,

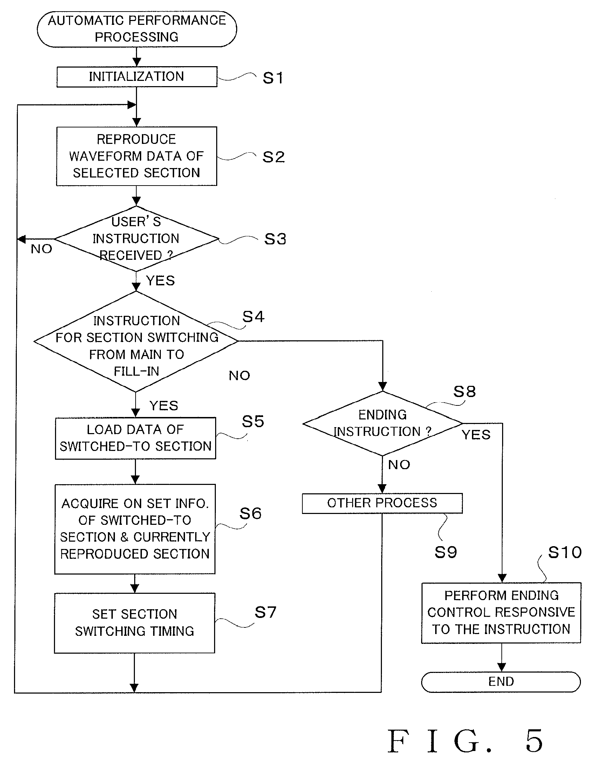

Next, a description will be given about "automatic performance processing" performed in the electronic musical instrument 100 using the aforementioned accompaniment pattern data. Here, the user causes the electronic musical instrument 100 to execute an automatic performance while selectively switching among the respective accompaniment pattern data of the main section 200, fill-in section 210, intro section 220, ending section 230, etc. shown in Fig. 3. Fig. 5 is a flow chart showing an example of the automatic performance processing performed by the CPU 1 of the electronic musical instrument 100. The CPU 1 starts up the instant automatic performance processing in response to an automatic performance start instruction given by the user. Let it be assumed here that, in one specific example of the automatic performance processing, the set of waveform data 20' is inserted during looped reproduction of the set of waveform data 20 associated with the main section 20 in response to a user's section switching instruction and then the reproduction of the main section 200 is resumed. Note that the term "section switching" is used in this specification to refer to an operation for ending reproduction of a switched-from set of waveform data and starting reproduction of another set of waveform data designated as a switching destination.

At step S1, the CPU 1 performs an initialization process. The initialization process includes, for example, an operation for setting a performance tempo in response to a user's operation and an operation for reading out selected accompaniment pattern data from the database (storage device 4) and loading the read-out accompaniment pattern data into the RAM 3. In the instant example, it is assumed that the main section 200 is currently selected, and thus, the CPU 1 loads the set of waveform data 20 and waveform reproduction control information 22 (including the switching position information 25), associated with the main section 200, from the storage device 4 into the RAM 3.

At next step S2, the CPU 1 starts reproducing the set of waveform data 20, associated with the main section 200, in accordance with the currently set performance tempo. Namely, the CPU 1 starts reading out the set of waveform data 20, associated with the main section 200, from the RAM 3. The audio reproduction section 8 generates and outputs a waveform signal on the basis of the read-out set of waveform data 20. Note that the CPU 1 activates a reproduction counter in response to the start of the automatic performance. The count value of the reproduction counter increments per predetermined cyclic period corresponding to the performance tempo. The reproduction counter counts an elapsed time (reproduction timing) of the waveform reproduction. When the currently set performance tempo and the basic tempo associated with the waveform data 20 are different from each other, the CPU 1 and the audio reproduction section 8 can generate tones of the waveform data 20 at a desired performance tempo, without involving tone pitch changes from the original, by performing the well-known time stretch control.

Next, at step S3, the CPU 1 determines whether or not any user's instruction has been received. If no user's instruction has been received (NO determination at step S3), the CPU 1 performs the operations of steps S2 and S3 in a looped fashion. Thus, the CPU 1 and the audio reproduction section 8 repetitively reproduce the entire two-measure waveform data 20 associated with the single main section 200. The aforementioned operations of step S2 etc. performed by the CPU 1 and the aforementioned audio reproduction section 8 together function as a reproduction step of reproducing any one of the plurality of sets of waveform data, stored in the storage section, in accordance with the passage of time, or as a reproduction section that reproduces any one of the plurality of sets of waveform data, stored in the storage section, in accordance with the passage of time.

Once any user's instruction has been received during the looped reproduction of the waveform data 20 at steps S2 and S3 (YES determination at step S3), the CPU 1 performs various operations responsive to the received user's instruction (steps S4 and S8). The instant example of the automatic performance processing assumes, as the user's instruction, a "section switching instruction" for switching the waveform data to be reproduced (to-be-reproduced waveform data or object of reproduction) from the main section 200 to the fill-in section 210 (step S4), an automatic performance ending instruction (step S8) or other instruction. An operation of the panel operator unit 6 for receiving the user's "section switching instruction" and the aforementioned operation of step S4 performed by the CPU 1 together constitute a step of designating another set of waveform data (second set of waveform data) during reproduction, by the reproduction step, of one set of waveform data (first set of waveform data), or as a designation section that designates another set of waveform data (second set of waveform data) during reproduction, by the reproduction section, of one set of waveform data (first set of waveform data).

If the "section switching instruction" has been received (YES determination at step S4), the CPU 1 loads the set of waveform data 20' and waveform reproduction control information 22, associated with the fill-in section 210 designated as the switching destination, from the database (storage device 4) into the RAM 3 at step S5, but also acquires, from the RAM 3, the switching position information 25 (onset information "Fo_1" to "Fo_8" in Fig. 4B) associated with the fill-in section 210 and the switching position information 25 (onset information "Mo_1" to "Mo_10" in Fig. 4B) associated with the currently reproduced main section 200 at step S6. The operation of step S6 performed by the CPU 1 functions as an acquisition step of acquiring, for each of the currently reproduced one set of waveform data (first set of waveform data) and the designated other set of waveform data (second set of waveform data), the switching position information specifying one or more switching positions in the waveform data, or as an acquisition section that acquires, for each of the currently reproduced one set of waveform data (first set of waveform data) and the designated other set of waveform data (second set of waveform data), the switching position information specifying one or more switching positions in the waveform data.

Further, at step S7, the CPU 1 performs a process for setting later-detailed "section switching timing" on the basis of positional relationship among the time point when the section switching instruction has been received (i.e., received time of the section switching instruction), the onset information (potential switching position) in the set of waveform data 20' of the fill-in section 210 currently designated as the switching destination and the onset information (potential switching position) in the set of waveform data 20 of the fill-in section 210 currently reproduced. After the "section switching timing" is set at step S7, the automatic performance processing revers to step S2.

If the user's instruction is the "automatic performance ending instruction" (NO determination at step S4 and YES determination at step S8), the CPU 1 ends the instant automatic performance processing by performing ending control responsive to the automatic performance ending instruction. If, for example, the "automatic performance ending instruction" has been given by the user instructing section switching instruction from the main section 200 to the ending section 230, the CPU 1 ends the reproduction of the main section 200 in a measure immediately following the received time of the automatic performance ending instruction, then starts reproduction of the ending section 230 in place of the main section 200, and then ends the automatic performance processing after reproducing the ending section 230 to the end. Further, if the "automatic performance ending instruction" has been given by the user operating the reproduction (play)/stop button, the CPU 1 ends the automatic performance processing by performing reproduction end control at the time point when the automatic performance ending instruction has been received.

Further, if the user's instruction received is not any one of the aforementioned (NO determination at each of steps S4 and S8), the CPU 1 performs another process corresponding to the user's instruction. Examples of the other user's instruction include an instruction for switching between sections other than the aforementioned switching from the main section 200 to the fill-in section 210 or to the ending section, a mute on/off instruction, a tone color change instruction and a tone volume change instruction.

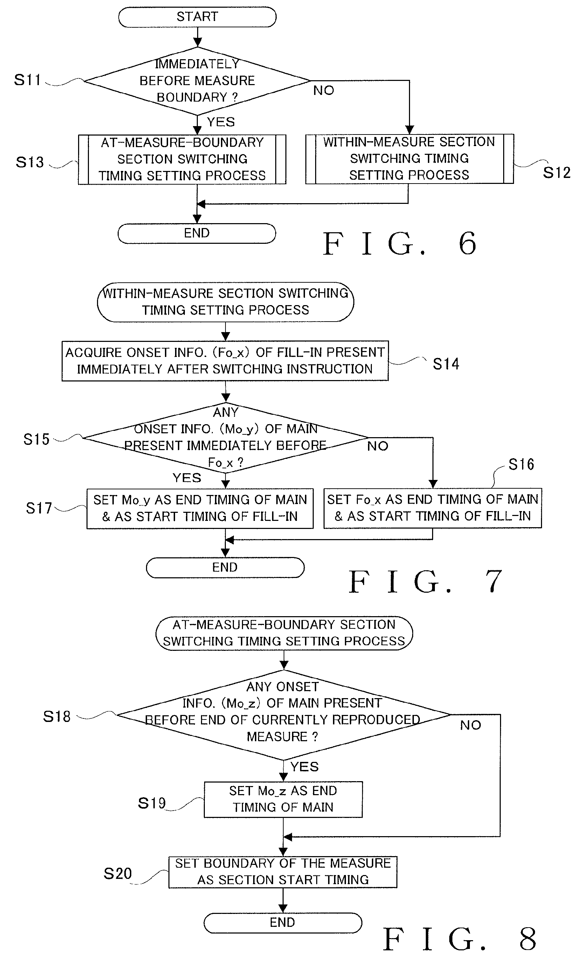

The following describe in greater detail the section switching timing setting process at step S7 above. Figs. 6 to 8 are flow charts showing the section switching timing setting process. The CPU 1 starts the section switching timing setting process of Fig. 6 once the processing of Fig. 5 proceeds to step S7 (i.e., in response to the instruction for switching from the main section to the fill-in section).

At step S 11, the CPU 1 determines whether or not the time point when the section switching instruction has been received is immediately before a measure boundary. The measure boundary, which is an example of a musical boundary position, is indicative of a boundary between one measure and another measure immediately following the one measure. In the illustrated example of Fig. 4B, a junction between the end of the first measure and the head of the second measure in the set of waveform data 20 associated with the main section 200 and a junction of the end of the second measure and the head of the first measure at the time of looped reproduction are the measure boundaries. The CPU 1 can identify relationship between a current reproduced position of the waveform data at the time point when the section switching instruction has been received and a measure boundary on the basis of the count of beats based on the aforementioned reproduction count value. The determination as to whether or not the time point the section switching instruction has been received is immediately before a measure boundary can be made, for example, by determining whether or not the time point when the section switching instruction has been received is within a predetermined time (range) (of e.g. 50 msec) immediately before the end of the currently reproduced measure or whether or not the time point when the section switching instruction has been received is at or after a position of four beats and a half in the currently reproduced measure.

If the time point when the section switching instruction has been received is not immediately before a measure boundary (NO determination at step S11), the CPU 1 performs a "within-measure section switching timing setting process" at step S12 as shown in Fig. 7. If the time point when the section switching instruction has been received is immediately before a measure boundary (YES determination at step S11), the CPU 1 performs an "at-measure-boundary section switching timing setting process" at step S13 as shown in Fig. 8.

Now, with reference to the aforementioned conceptual diagram of Fig. 1 and the flow charts of Figs. 6, 7 and 8, examples of the "section switching timing setting process" specific to different received times of the section switching instruction will be described mainly in relation to "Case A", "Case B" and "Case C".

"Case A" depicted by arrow 50a in Fig. 1 is where the user has given an instruction for switching to the fill-in section 210 immediately before the third beat of the first measure. In this case, the CPU 1 makes a NO determination at step S11 to proceed to the "within-measure section switching timing setting process" at step S12. "Case B" depicted by arrow 50b in Fig. 1 is where the user has given an instruction for switching to the fill-in section 210 immediately before the fourth beat of the first measure. In this case too, the CPU 1 makes a NO determination at step S11 to proceed to the "within-measure section switching timing setting process" at step S12.

In the "within-measure section switching timing setting process", as shown in Fig. 7, the CPU 1 acquires, at step S14, one onset information "Fo_x" ("x" is any one of values "1" to "8") present immediately after the received time of the section switching instruction from among the onset information "Fo_1" to "Fo_8" of the fill-in section 210 acquired at step S6 above. Then, at step S15, the CPU 1 checks all of the onset information "Mo_1" to "Mo_10" of the currently reproduced main section 200 to determine whether any one of the onset information "Mo_y" ("y" is any one of values "1" to "10") of the currently reproduced main section 200 is present within a predetermined time (range) immediately before the onset information "Fo_x" of the fill-in section 210 acquired at step S14 above.

The predetermined time (range) has a time length of, for example, 50 msec. It is desirable that the time length of the predetermined time is one necessary for preventing twice sounding that would occur at the time of switching from the main section 200 to the fill-in section 210 due to a too-close temporal distance between tone generation of the switched-from section (main section 200) and tone generation of the switched-to section (fill-in section 210). The "50 msec" time length is a preferable example because (1) twice sounding tends to occur in a case where positions of individual tones recorded as waveform data are deviated from beat positions indicated by notes (typically, where the recorded tones were tones performed earlier than the beat positions indicated by the notes (i.e., in an ahead-of-beat style), (2) deviation widths between positions of individual tones recorded as waveform data to be used as accompaniment pattern data and timing of notes (reference timing indicated by counts of beats) can be assumed to be approximately within "50 msec", and (3) tones within a 50 msec deviation width can be regarded as tones within a time of one beat (in other words, tones temporally apart from each other by more than 50 msec can be regarded as tones of different beats (different timing)).

In Case A, for example, the onset information of the fill-in section 210 present immediately after the time point when the section switching instruction has been received (indicated by arrow 50a) is "Fo_5", and no onset information of the main section 200 is present before "Fo_5". Namely, although the onset information of the main section 200 present immediately before "Fo_5", no onset information "Mo_y" of the main section 200 is present in a portion from the section switching instruction to "Fo_5" because the section switching instruction has been given later than "Mo_2"; therefore, a NO determination is made at step S15. In this case, the CPU 1 at step S16 sets the onset information "Fo_x" ("Fo_5" in Case A) of the fill-in section 210, present immediately after the received time of the section switching instruction, as end timing of the currently reproduced main section 200, but also sets the onset information "Fo_x" ("Fo_5" in Case A) of the fill-in section 210 as start timing at which reproduction of the fill-in section 210, currently designated as a switching destination, is to be started.

In Case B, the onset information of the fill-in section 210 present immediately after the received time of the section switching instruction (indicated by arrow 50b is "Fo_7", and the onset information of the main section 200 present immediately before "Fo_7" is "Mo_5". Let it be assumed here that "Mo_5" is present within the predetermined time (e.g., 50 msec) from "Fo_7". Then, if the section switching is executed at the position of the onset information "Fo_7" of the fill-in section 210, the attack portion corresponding to "Fo_7" is sounded immediately (within 50 msec) after sounding of the attack portion corresponding to "Mo_5", so that so-called "twice sounding" would occur.

Thus, if any onset information "Mo_y" of the currently reproduced main section 200 is present within the predetermined time immediately before the onset information "Fo_x" of the fill-in section 210 that is present immediately after the received time of the section switching instruction as in Case B (YES determination at step S 15), the CPU1 at step S17 not only sets, as end timing of the currently reproduced main section 200, the onset information "Mo_y" ("Mo_5" in Case B) of the currently reproduced main section 200 present within the predetermined time immediately before the onset information "Fo_x" ("Fo_7" in Case B) of the fill-in section 210 that is present immediately after the received time of the section switching instruction, but also sets the onset information "Mo_y" ("Mo_5" in Case B) of the main section 200 as start timing for starting reproduction of the fill-in section 210 designated as the switching destination. Such settings can prevent the twice sounding because the reproduction of the main section is ended before sounding of "Mo_5" of the main section and then reproduction of the fill-in section is started.

Following step S16 or S 17, the CPU 1 ends the process of Fig. 7.

"Case C" depicted by arrow 50c is where the user has given an instruction for switching to the fill-in section 210 at or after the fourth beat of the first measure. In this, case, the CPU 1 makes a YES determination at step S11 above to proceed to the "at-measure-boundary section switching timing setting process" of step S 13.

In the "at-measure-boundary section switching timing setting process", as shown in Fig. 8, the CPU 1 determines, at step S18, whether or not any onset information "Mo_z" (z is any one of values "1" to "10") of the currently reproduced main section 200 is present within a predetermined time (range) immediately before the end of the currently reproduced measure. The predetermined time has a time length set, for example, at 50 msec with a view to preventing "twice sounding" as explained above in relation to step S 15.

In Case C, the time point when the section switching instruction has been received (i.e., received time of the section switching instruction) (arrow 50c) is immediately before the end of the first measure, and the onset information of the main section 200 present immediately before the end of the first measure is "Mo_6", and let it be assumed here that the onset information "Mo_6" is present within the predetermined time (e.g., 50 msec) from the end of the first measure. Thus, if the section switching is executed at the end of the first end or at the position of the onset information "Fo_1" of the fill-in section 210 present immediately after the time of the section switching instruction, the attack portion of "Fo_1" would be sounded immediately after (i.e., within 50 msec from) sounding of the attack portion of "Mo_6", so that "twice sounding" would occur.

Therefore, where the section switching instruction has been received immediately before the end of a measure as in Case C and where any one of the onset information "Mo_z" of the currently reproduced main section 200 is present within the predetermined time (e.g., 50 msec) immediately before the end of the measure (YES determination of step S18), the CPU 1 at step S 19 not only sets, as the end timing of the currently reproduced main section 200, the position of the onset information "Mo_z" ("Mo_6" in Case C) of the currently reproduced main section 200 immediately before the end of the measure, but also the CPU 1 at step S20 sets, as the start timing for starting reproduction of the fill-in section 210 designated as the switching destination, a boundary position of the currently reproduced measure (the end of the first measure or the head of the second measure in Case C).

On the other hand, in the case where the section switching instruction has been received immediately before the end of a measure but if no onset information "Mo_z" of the currently reproduced main section 200 is present within the predetermined time (e.g., 50 msec) immediately before the end of the measure (NO determination of step S18), the CPU 1 sets the boundary position of the currently reproduced measure as the start timing of the reproduction of the designated fill-in section 210 but also sets the boundary position of the currently reproduced measure as the end timing of the currently reproduced main section 200. Note that executing section switching at a measure boundary position is itself commonly done in the art as section switching control of accompaniment pattern data using, for example, MIDI data.

After step S20, the CPU 1 terminates the process of Fig. 8. The aforementioned operations of steps S7, S16, S17 and S19 performed by the CPU 1 together function as a setting step of setting, as end timing for ending reproduction of the currently reproduced first set of waveform data, either one switching position of the second set of waveform data or one switching position of the currently reproduced first set of waveform data at least on the basis of the time point when the switching instruction has been received and with reference to the switching position information of the currently reproduced first set of waveform data and the switching position information of the designated second set of waveform data, or as a setting section that sets, as end timing for ending reproduction of the currently reproduced first set of waveform data, either one switching position of the second set of waveform data or one switching position of the currently reproduced first set of waveform data at least on the basis of the time point when the switching instruction has been received and with reference to the switching position information of the currently reproduced first set of waveform data and the switching position information of the designated second set of waveform data.

The automatic performance processing reverts to step S2 after the section switching timing has been set through the processes of Figs. 6 to 8 (i.e., through the operation of step S7). Then, while executing looped reproduction of the waveform data of the main section 200 at steps S2 and S3, the CPU 1 switches the to-be-reproduced waveform data (object of reproduction) from the first set of waveform data 20 of the main section 200 to the second set of waveform data 20' of the fill-in section 210 once the reproduced position of the currently reproduced main section 200 reaches the section switching timing set in the aforementioned manner.

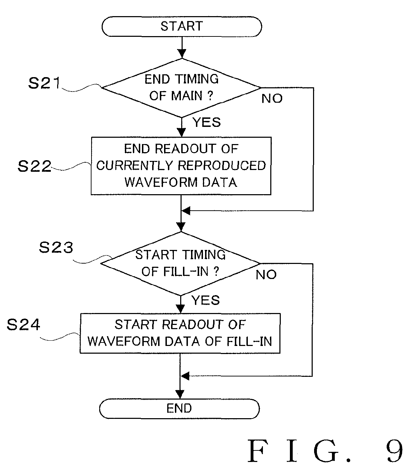

Fig. 9 is a flow chart of a section switching process performed by the CPU 1. The section switching process is an interrupt process started every predetermined time interval corresponding to a waveform readout clock. At step S21, the CPU 1 determines whether the reproduced position of the currently reproduced main section 200 has reached the end timing set at step S16, S17 or S19. In response to the reproduced position of the currently reproduced main section 200 reaching the section switching timing (YES determination at step S21), the CPU 1 ends readout of the waveform data 20 of the main section 200. In response to the ending of the readout of the waveform data 20, the audio reproduction section 8 ends the reproduction of the waveform data 20 of the main section 200.

At next step S23, the CPU 1 determines whether or not the reproduced position of the currently reproduced main section 200 has reached the start timing set at step S16, S17 or S20. In response to the reproduced position of the currently reproduced main section 200 reaching the start timing (YES determination at step S23), the CPU 1 starts readout of the waveform data 20' of the fill-in section 210. In response to the start of the readout of the waveform data 20' of the fill-in section 210, the audio reproduction section 8 starts reproduction of the waveform data 20' of the fill-in section 210. If, on the other hand, the reproduced position of the currently reproduced main section 200 has not yet reached the start or end timing (NO determinations at step S21 and S23), the CPU 1 ends the process of Fig. 9. In this manner, each time the interrupt process of Fig. 9 is started, the CPU 1 awaits arrival of the end or start timing.

In the case where a section switching instruction has been given within a measure and no onset information "Mo_y" of the main section is present within the predetermined time immediately before the onset information "Fo_5" of the fill-in section that is present immediately after the section switching instruction (NO determination at step S 15), as in Case A, once the reproduced position of the currently reproduced main section 200 reaches the position corresponding to "Fo_5" (YES determinations at steps S21 and S23 above), the CPU 1 and the audio reproduction section 8 not only end the reproduction of the waveform data 20 of the main section 200 but also start reproduction of the waveform data 20' of the fill-in section 210 (at steps S22 and S24 above). In this case, because the main section has no unwanted tone (attack portion) within the predetermined time immediately before "Fo_5" and because the reproduction of the waveform data of the fill-in section 210 can be started with the attack portion of "Fo_5", it is possible to reliably prevent noise from being generated due to twice sounding and due to starting of reproduction partway through a tone (one "peak" in a waveform).

Further, in the case where a section switching instruction has been given within a measure and the onset information "Mo_5" of the main section is present within the predetermined time immediately before the onset information "Fo_7" of the fill-in section 210 that is present immediately after the section switching instruction (YES determination at step S15), as in Case B, once the reproduced position of the currently reproduced main section 200 reaches the position corresponding to "Mo_5" (YES determinations at steps S21 and S23 above), the CPU 1 and the audio reproduction section 8 not only end the reproduction of the waveform data 20 of the main section 200 but also start reproduction of the waveform data 20' of the fill-in section 210 (at steps S22 and S24 above). In this case, because the reproduction of the waveform data of the main section 200 is ended at the position of "Mo_5", sounding of the attack portion of "Mo_5" can be avoided. As the reproduction of the waveform data 20' of the fill-in section 210 is started at the position of "Mo_5", sounding of the fill-in section 210 starts at the position of "Fo_7". Thus, in this case too, it is possible to reliably prevent noise from being generated not only due to twice sounding but also due to starting of reproduction partway through a tone (one "peak" in a waveform).

In the case where a section switching instruction has been given at a measure boundary and the onset information "Mo_6" of the main section is present within the predetermined time immediately before the end of the measure (YES determination at step S18 above), as in Case C, once the reproduced position of the currently reproduced main section 200 reaches the position corresponding to "Mo_6" (YES determination at step S21 above), the CPU 1 and the audio reproduction section 8 end the reproduction of the waveform data 20 of the main section 200 (step S22 above). Then, once the current reproduction timing reaches the measure boundary position (YES determination at step S23 above), the CPU 1 and the audio reproduction section 8 start reproduction of the waveform data 20' of the fill-in section 210 (step S24 above). In this case, by ending the reproduction of the waveform data 20 of the main section 200 at the position of "Mo_6", sounding of the attack portion of "Mo_6" can be avoided, and thus, it is possible to reliably prevent noise from being generated due to twice sounding.

Further, in the case where a section switching instruction has been given at a measure boundary and no onset information "Mo_z" of the main section is present within the predetermined time immediately before the end of the measure (NO determination at step S18 above), once the reproduced position of the currently reproduced main section reaches the measure boundary position (YES determinations at steps S21 and S23 above), the CPU 1 and the audio reproduction section 8 end the reproduction of the waveform data 20 of the main section 200 and start reproduction of the waveform data 20' of the fill-in section 210 (steps S22 and S24 above).

The aforementioned operation of step S22 performed by the CPU 1 functions as a control step of, in response to designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step, or as a control section that, in response to designation of the second set of waveform data, performs control for switching the waveform data to be reproduced by the reproduction section from the first set of waveform data to the second set of waveform data, the control section at least performing control for ending the reproduction of the first set of waveform data in response to the waveform data reproduction timing by the aforementioned reproduction section reaching the set end timing.

Once the object of reproduction is switched to the waveform data 20' of the fill-in section 210 through the process of Fig. 9, the CPU 1 and the audio reproduction section 8 reproduce the waveform data 20' of the fill-in section 210 to the end of one measure at least once and end the reproduction of the waveform data 20' of the fill-in section 210 through the operations of steps S2 and S3 of Fig. 5. Then, the CPU 1 and the audio reproduction section 8 return the object of reproduction back to the main section 200 and loop-reproduce the waveform data associated with the main section 200.

Thus, the example of the automatic performance processing, arranged as above, can achieve the superior advantageous benefit of permitting waveform data switching at desired timing while reliably preventing generation of noise due to starting of reproduction partway through a waveform or due to "twice sounding" when the object of reproduction is to be switched from the main section 200 to the fill-in section 210.

Note that, whereas the instant embodiment has been described above in relation to the case where the potential switching position is set at the start position of each of the attack portions, the present invention is not so limited and such a potential switching position may be set, for example, at a position where the waveform level is lower than a predetermined value or at a position where such a lower waveform level state lasts for a predetermined time.

Further, whereas the instant embodiment has been described above in relation to the case where the onset information "Mo_1" to "Mo_10" and "Fo_1" to "Fo_8" for the sets of waveform data 20 and 20' are acquired at step S6 with reference to the switching position information 25 stored in the waveform reproduction control information 22 in association with the sets of waveform data 20 and 20', the switching position information 25 to be acquired at step S6 need not necessarily be prestored information and may be calculated through realtime analysis, during reproduction, of the currently reproduced waveform data 20 and the waveform data 20' associated with the fill-insection210 designated as a switching destination.

Further, whereas S11 above has been described above as arranged to use a boundary position of one measure as an example of a musical boundary that functions as a determination condition, step S11 may be arranged to use a boundary position of a group of a plurality of measures, such as a group of four measures or eight measures, as such a musical boundary that functions as a determination condition. As another alternative, step S11 above may be arranged to use, for example, a count of beats or clock pulses as such a determination condition.

Further, in the case where not only reproduction of the waveform data 20 of the main section is to be ended but also reproduction of the waveform data 20' of the fill-in section 210 is to be started at the same position of one onset information ("Fo_x" or "Mo_y") as in Case A or Case B, the audio reproduction section 8 may perform, at the time of section switching, a cross-fade process on the waveform data 20 of the main section 200 and the waveform data 20' of the fill-in section 210 with an appropriate time width (e.g., 5.8 msec). Further, in the case where reproduction of the waveform data 20 of the main section 200 is to be ended at the position of "Mo_z" of the waveform data 20 as in Case C, a fade-out process may be performed such that the waveform data 20 of the main section 200 is brought into a silent state at the position of "Mo_z".

Further, whereas the instant embodiment has been described in relation to the case where the audio reproduction section 8 ends the reproduction of the waveform data 20 of the main section 200 (step S22) and starts the reproduction of the waveform data 20' of the fill-in section 210 (step S24) in the section switching process of Fig. 9, the operation of step S22 may mute performance tones based on the waveform data 20 of the main section 200 rather than end (stop) the reproduction of the waveform data 20 of the main section 200.

Furthermore, whereas the aforementioned embodiment has been described above in relation to the case where the currently reproduced waveform data is switched from the main section 200 to the fill-in section 210 as an example of section switching, the present invention is not so limited and may be applicable to switching between any desired sections, such as switching from the main section 200 to the ending section 230 and switching from the fill-in section 210 to the ending section 230. In short, it is only necessary that the section switching process be a process for switching waveform data of a given set of accompaniment pattern data to another set of accompaniment pattern data.

Furthermore, whereas the aforementioned embodiment has been described above in relation to the sets of accompaniment pattern data 200, 210, 220, 230, ... to be used in a single performance part (such as a drum part), the aforementioned database may further store therein a plurality of section-specific accompaniment pattern data in association with a plurality of performance parts (such as a chord backing part and a bass part) not shown. The database may further store therein a plurality of sets of accompaniment pattern data 200, 210, 220, 230, ... corresponding to a variety of musical genres, such as jazz, pops, rock and blues.

Also note that the electronic musical instrument 100 may be constructed to further store accompaniment pattern data created in MIDI data into the database (storage device 4) so that an automatic performance can be executed using the accompaniment pattern data created in MIDI data. Further, one or more performance parts using accompaniment pattern data created in MIDI data and one or more performance parts using accompaniment pattern data created in waveform data may be included mixedly in an automatic performance.

Note that the accompaniment pattern data 200, 210, 220, 230, ... stored in the database (storage device 4) are data stored in advance in the database, for example, by a maker or manufacturer of the electronic musical instrument 100. However, the present invention is not so limited, and accompaniment pattern data newly created (recorded) by a user of the electronic musical instrument may be additionally stored into the database. Also, accompaniment pattern data newly created by a maker or a user may be acquired via external equipment (such as a server apparatus connected to the electronic musical instrument 100 via the Internet) so that the accompaniment pattern data already stored in the database can be replaced with the acquired accompaniment pattern data or that the acquired accompaniment pattern data can be newly stored into the database. The reproduction step or section of reproducing, in accordance with the passage of time, any one of the plurality of sets of waveform data stored in the storage section may be arranged to not only reproduce waveform data associated with any one of the accompaniment pattern data 200, 210, 220, 230, ... stored in the storage device 4 provided in the electronic musical instrument 100, but also, for example, reproduce waveform data acquired via the external equipment while acquiring the waveform data via the external equipment.

Also note that the electronic musical instrument 100 is not necessarily be limited to the type where various functional modules, such as the performance operator unit 5, display unit 7, audio reproduction unit 8, MIDI tone generator unit 9 and tone control unit 10, are provided or incorporated in a single apparatus casing, and individual devices or elements may be interconnected, via a MIDI interface or the like per one or more functional modules, to construct the electronic musical instrument 100.

Furthermore, the application of the waveform reproduction apparatus of the present invention is not limited to the electronic musical instrument 100, and the waveform reproduction apparatus of the present invention may be applied to any other types of apparatus, devices and equipments, such as personal computers, portable communication terminals, such as PDAs (portable information terminals) and portable telephones, and game devices, etc., as long as such apparatus, devices and equipment are capable of executing an automatic performance of tones at least on the basis of waveform data.

Finally, it should be appreciated that the processor employed in the present invention may be a processor, such as a DSP, capable of executing microprograms without being limited a processor, such as the aforementioned CPU1, capable of executing software programs. As another alternative, the processor employed in the present invention may be a processor comprising dedicated hardware circuitry (integrated circuit or a group of discrete circuits) capable of implementing desired processing functions.

## Claims

1. A computer-readable storage medium containing a group of instructions executable by a processor for performing a method for reproducing a waveform by use of a plurality of sets of waveform data stored in a storage unit,
the method comprising:
a reproduction step of reproducing any one of the plurality of sets of waveform data, stored in the storage unit, in accordance with a passage of time;
a step of designating a second set of waveform data of the plurality of sets of waveform data during reproduction, by the reproduction step, of a first set of waveform data of the plurality of sets of waveform data;
a step of acquiring, for each of the first set of waveform data and the second set of waveform data, switching position information specifying one or more switching positions in the waveform data;
a setting step of setting, as end timing for ending reproduction of the currently reproduced first set of waveform data, either one switching position in the second set of waveform data or one switching position in the currently reproduced first set of waveform data at least on a basis of a time point when designation of the second set of waveform data has been received and with reference to the switching position information of the first set of waveform data and the switching position information of the second set of waveform data; and
a control step of, in response to the designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step.

2. The computer-readable storage medium as claimed in claim 1, wherein the setting step further sets the set end timing as start timing for starting reproduction of the designated second set of waveform data, and
wherein the control step performs control for starting reproduction of the second set of waveform data in response to the timing of waveform data reproduction by the reproduction step reaching the set start timing.

3. The computer-readable storage medium as claimed in claim 1 or 2, wherein the setting step determines whether or not any switching position in the currently reproduced first set of waveform data is present within a predetermined time before a potential switching position in the second set of waveform data that is present immediately after the time point when the designation of the second set of waveform data has been received, and
wherein, upon determination that any switching position in the currently reproduced first set of waveform data is present within the predetermined time, the setting step sets, as the end timing, the switching position in the currently reproduced first set of waveform data, but upon determination that no switching position in the currently reproduced first set of waveform data is present within the predetermined time, the setting step sets, as the end timing, a switching position in the second set of waveform data present immediately after the time point when the designation of the second set of waveform data has been received.

4. The computer-readable storage medium as claimed in claim 1, where the setting step further sets, as start timing for starting the reproduction of the designated second set of waveform data, a musical boundary position present immediately after the time point when the designation of the second set of waveform data has been received, and
wherein the control step performs control for starting reproduction of the second set of waveform data in response to the timing of waveform data reproduction by the reproduction step reaching the set start timing.

5. The computer-readable storage medium as claimed in claim 1 or 4, wherein the setting step determines whether or not any switching position in the currently reproduced first set of waveform data is present within a predetermined time before a musical boundary that is present immediately after the time point when the designation of the second set of waveform data has been received, and
wherein, upon determination that any switching position in the currently reproduced first set of waveform data is present within the predetermined time, the setting step sets, as the end timing, the switching position in the first set of waveform data, but upon determination that no switching position in the currently reproduced first set of waveform data is present within the predetermined time, the setting step sets, as the end timing, a musical boundary position present immediately after the time point when the designation of the second set of waveform data has been received.

6. A waveform reproduction apparatus comprising:
a storage unit configured to store a plurality of sets of waveform data;
a reproduction unit configured to reproduce any one of the plurality of sets of waveform data, stored in the storage unit, in accordance with a passage of time;
a designation unit that designates a second set of waveform data of the plurality of sets of waveform data during reproduction, by the reproduction unit, of a first set of waveform data of the plurality of sets of waveform data;
an acquisition unit that acquires, for each of the first set of waveform data and the second set of waveform data, switching position information specifying one or more switching positions in the waveform data;
a setting unit that sets, as end timing for ending reproduction of the currently reproduced first set of waveform data, either one switching position in the second set of waveform data or one switching position in the currently reproduced first set of waveform data at least on a basis of a time point when designation of the second set of waveform data has been received and with reference to the switching position information of the first set of waveform data and the switching position information of the second set of waveform data; and
a control unit that, in response to the designation of the second set of waveform data, performs control for switching the waveform data to be reproduced by the reproduction unit from the first set of waveform data to the second set of waveform data, the control unit at least performing control for ending the reproduction of the first set of waveform data in response to timing of waveform data reproduction by the reproduction unit reaching the end timing set by the setting unit.

7. A method executable by a processor for reproducing a waveform by use of a plurality of sets of waveform data stored in a storage unit, the method comprising:
a reproduction step of reproducing any one of the plurality of sets of waveform data, stored in the storage unit, in accordance with a passage of time;
a step of designating a second set of waveform data of the plurality of sets of waveform data during reproduction, by the reproduction step, of a first set of waveform data of the plurality of sets of waveform data;
a step of acquiring, for each of the first set of waveform data and the second set of waveform data, switching position information specifying one or more switching positions in the waveform data;
a setting step of setting, as end timing for ending reproduction of the currently reproduced first set of waveform data, either one switching position in the second set of waveform data or one switching position in the currently reproduced first set of waveform data at least on a basis of a time point when designation of the second set of waveform data has been received and with reference to the switching position information of the first set of waveform data and the switching position information of the second set of waveform data; and
a control step of, in response to the designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step.

## Amended claims

### Amended claims under Art. 19.1 PCT

1. (Amended) A computer-readable storage medium containing a group of instructions executable by a processor for performing a method for reproducing a waveform by use of a plurality of sets of waveform data stored in a storage unit,
the method comprising:
a reproduction step of reproducing any one of the plurality of sets of waveform data, stored in the storage unit, in accordance with a passage of time;
a step of designating a second set of waveform data of the plurality of sets of waveform data during reproduction, by the reproduction step, of a first set of waveform data of the plurality of sets of waveform data;
a step of acquiring, for each of the first set of waveform data and the second set of waveform data, switching position information specifying one or more switching positions in the waveform data;
a setting step of determining, at least on a basis of a time point when designation of the second set of waveform data has been received and with reference to the switching position information of the first set of waveform data and the switching position information of the second set of waveform data, which of one switching position in the second set of waveform data and one switching position in the currently reproduced first set of waveform data should be set as end timing for ending reproduction of the currently reproduced first set of waveform data, the setting step setting the determined switching position as the end timing; and
a control step of, in response to the designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step.

2. (original) The computer-readable storage medium as claimed in claim 1, wherein the setting step further sets the set end timing as start timing for starting reproduction of the designated second set of waveform data, and
wherein the control step performs control for starting reproduction of the second set of waveform data in response to the timing of waveform data reproduction by the reproduction step reaching the set start timing.

3. (original) The computer-readable storage medium as claimed in claim 1 or 2, wherein the setting step determines whether or not any switching position in the currently reproduced first set of waveform data is present within a predetermined time before a potential switching position in the second set of waveform data that is present immediately after the time point when the designation of the second set of waveform data has been received, and
wherein, upon determination that any switching position in the currently reproduced first set of waveform data is present within the predetermined time, the setting step sets, as the end timing, the switching position in the first set of waveform data, but upon determination that no switching position in the currently reproduced first set of waveform data is present within the predetermined time, the setting step sets, as the end timing, a switching position in the second set of waveform data present immediately after the time point when the designation of the second set of waveform data has been received.

4. (original) The computer-readable storage medium as claimed in claim 1, where the setting step further sets, as start timing for starting the reproduction of the designated second set of waveform data, a musical boundary position present immediately after the time point when the designation of the second set of waveform data has been received, and
wherein the control step performs control for starting reproduction of the second set of waveform data in response to the timing of waveform data reproduction by the reproduction step reaching the set start timing.

5. (original) The computer-readable storage medium as claimed in claim 1 or 4, wherein the setting step determines whether or not any switching position in the currently reproduced first set of waveform data is present within a predetermined time before a musical boundary that is present immediately after the time point when the designation of the second set of waveform data has been received, and
wherein, upon determination that any switching position in the currently reproduced first set of waveform data is present within the predetermined time, the setting step sets, as the end timing, the switching position in the first set of waveform data, but upon determination that no switching position in the currently reproduced first set of waveform data is present within the predetermined time, the setting step sets, as the end timing, a musical boundary position present immediately after the time point when the designation of the second set of waveform data has been received.

6. (Amended) A waveform reproduction apparatus comprising:
a storage unit configured to store a plurality of sets of waveform data;
a reproduction unit configured to reproduce any one of the plurality of sets of waveform data, stored in the storage unit, in accordance with a passage of time;
a designation unit that designates a second set of waveform data of the plurality of sets of waveform data during reproduction, by the reproduction unit, of a first set of waveform data of the plurality of sets of waveform data;
an acquisition unit that acquires, for each of the first set of waveform data and the second set of waveform data, switching position information specifying one or more switching positions in the waveform data;
a setting unit that determines, at least on a basis of a time point when designation of the second set of waveform data has been received and with reference to the switching position information of the first set of waveform data and the switching position information of the second set of waveform data, which of one switching position in the second set of waveform data and one switching position in the currently reproduced first set of waveform data should be set as end timing for ending reproduction of the currently reproduced first set of waveform data, the setting unit setting the determined switching position as the end timing; and
a control unit that, in response to the designation of the second set of waveform data, performs control for switching the waveform data to be reproduced by the reproduction unit from the first set of waveform data to the second set of waveform data, the control unit at least performing control for ending the reproduction of the first set of waveform data in response to timing of waveform data reproduction by the reproduction unit reaching the end timing set by the setting unit.

7. (Amended) A method executable by a processor for reproducing a waveform by use of a plurality of sets of waveform data stored in a storage unit, the method comprising:
a reproduction step of reproducing any one of the plurality of sets of waveform data, stored in the storage unit, in accordance with a passage of time;
a step of designating a second set of waveform data of the plurality of sets of waveform data during reproduction, by the reproduction step, of a first set of waveform data of the plurality of sets of waveform data;
a step of acquiring, for each of the first set of waveform data and the second set of waveform data, switching position information specifying one or more switching positions in the waveform data;
a setting step of determining,
at least on a basis of a time point when designation of the second set of waveform data has been received and with reference to the switching position information of the first set of waveform data and the switching position information of the second set of waveform data, which of one switching position in the second set of waveform data and one switching position in the currently reproduced first set of waveform data should be set as end timing for ending reproduction of the currently reproduced first set of waveform data, the setting step setting the determined switching position as the end timing; and
a control step of, in response to the designation of the second set of waveform data, performing control for switching the waveform data to be reproduced by the reproduction step from the first set of waveform data to the second set of waveform data, the control step at least performing control for ending the reproduction of the first set of waveform data in response to timing of waveform data reproduction by the reproduction step reaching the end timing set by the setting step.
